# EUROPEAN PATENT APPLICATION

(11) **EP 2 728 146 A2**
(43) Date of publication of application: **07.05.2014**
(21) Application number: 13187068.5
(22) Date of filing: 02.10.2013
(51) Int. Cl.: F02C 9/28

(54) **Engine control parameter trimming**

(30) Priority: 05.11.2012 GB 201219815
(71) Applicant: Rolls-Royce plc, London SW1E 6AT (GB)
(72) Inventor: Snell, Robert, Derby, Derbyshire DE22 5JR (GB)
(74) Representative: Yeomans, Victoria Jane Anora

(57) **Abstract**

A method of re-trimming an engine control parameter. Measure an engine parameter over time. Calculate change in the measured parameter per engine cycle. Determine change of thrust due to the calculated change in the measured parameter from a reference database. Define a new trim value for the engine control parameter that is a function of the change of thrust. Apply the new trim value to the engine control parameter.

## Description

The present invention relates to re-trimming an engine control parameter on the basis of changes in a measured engine parameter over time. In particular it relates to re-trimming an engine control parameter that is used to control a gas turbine engine.

Typically a gas turbine engine is controlled either to a shaft speed, such as a low pressure shaft speed, or to an engine pressure ratio or a power ratio. The pilot, where a gas turbine engine is used to power an aircraft, demands thrust. Thrust is not measured in an operational engine. Instead the control algorithms relate demanded thrust to the engine control parameter. It is known to trim such an engine control parameter so that the thrust indicated to the pilot is as expected relative to the demanded thrust. Other engine parameters are also measured which are in known relationship to the engine control parameters.

Typically an engine control parameter is trimmed when the engine is passed off the production line. The trim applied may be calculated on the basis of the specific engine, the engine type, or a combination of these bases. Use of the engine changes the amount of thrust available relative to the minimum certified thrust. Thus it is beneficial to change the trim value of an engine control parameter at intervals through engine life. Typically the engine control parameter is re-trimmed when the engine is passed off following overhaul or maintenance, although re-trimming may also be applied at other times.

The present invention provides a method of re-trimming an engine control parameter.

Accordingly the present invention provides a method of re-trimming an engine control parameter of a gas turbine engine comprising steps to: measure an engine parameter over time; calculate change in the measured parameter per engine cycle; determine change of thrust due to the calculated change in the measured parameter from a reference database; define a new trim value for the engine control parameter that is a function of the change of thrust; and apply the new trim value to the engine control parameter.

Advantageously the method enables re-trimming of an engine control parameter to ensure that thrust is maintained at or above the minimum certified or agreed thrust and that overthrust is reduced.

The present invention also provides a gas turbine engine comprising the method. Advantageously, the life of the gas turbine engine and its components is increased because overthrust is reduced so components are run more efficiently. The gas turbine engine may comprise two shafts or three shafts.

The control parameter may be selected from the group comprising: shaft speed; turbofan power ratio; engine pressure ratio. The method of the present invention advantageously reduces overthrust and thereby increases component life when the engine is controlled using any of these control parameters.

The measured engine parameter may be selected from the group comprising: turbine gas temperature; compressor exit pressure; total engine temperature; engine gas temperature; difference between modelled shaft speed and measured shaft speed. Advantageously, each of these parameters is usually measured on an engine and so no additional measuring equipment is required to implement the method of the present invention.

The reference database may comprise a graph relating the change of thrust to the calculated change in the measured parameter. Alternatively the reference database may comprise at least one equation relating the change of thrust to the calculated change in the measured parameter. Alternatively the reference database may comprise a look up table and a method to interpolate between values. Advantageously, the reference database can be populated in advance so that it is rapid to obtain the change in thrust.

Alternatively, the reference database may be populated using measured data from the measured engine parameter and the relationship between change in thrust and the measured engine parameter may be derived dynamically. Advantageously this provides a bespoke reference database which is more accurate for the particular embodiment of the method of the present invention.

The new trim value may be applied automatically. Advantageously there is no delay between calculation and application of the new trim value.

Alternatively the new trim value may be applied manually. Advantageously this provides a stage of checking.

The new trim value may be applied in response to the determined change of thrust exceeding a threshold. The trim value may be applied only after the threshold has been exceeded for a predetermined number of evaluations, period of time or number of cycles. Advantageously, the overthrust can be minimised more quickly than awaiting defined maintenance events.

The new trim value may be applied in response to changing an engine component. Advantageously this is a defined trigger event and the engine control parameter will usually need to be re-trimmed at this point so unnecessary calculation is not performed.

The engine component may comprise a subsystem or module of the engine. The subsystem or module may comprise one of: an engine core; an engine fan assembly; a compressor module; a turbine module; or any other module within the engine.

Any combination of the optional features is encompassed within the scope of the invention except where mutually exclusive.

The present invention will be more fully described by way of example with reference to the accompanying drawings, in which:
Figure 1 is a sectional side view of a gas turbine engine.
Figure 2 is a graph of thrust against engine cycles for a gas turbine engine controlled to shaft speed.
Figure 3 is a graph of thrust against engine cycles for a gas turbine engine controlled to an engine pressure ratio or turbofan power ratio.
Figure 4 is a graph of change of thrust due to core deterioration against change in TGT.
Figure 5 is a graph of thrust against engine cycles reflecting periodic application of the method of the present invention.
Figure 6 is a graph showing thrust against measured shaft speed.

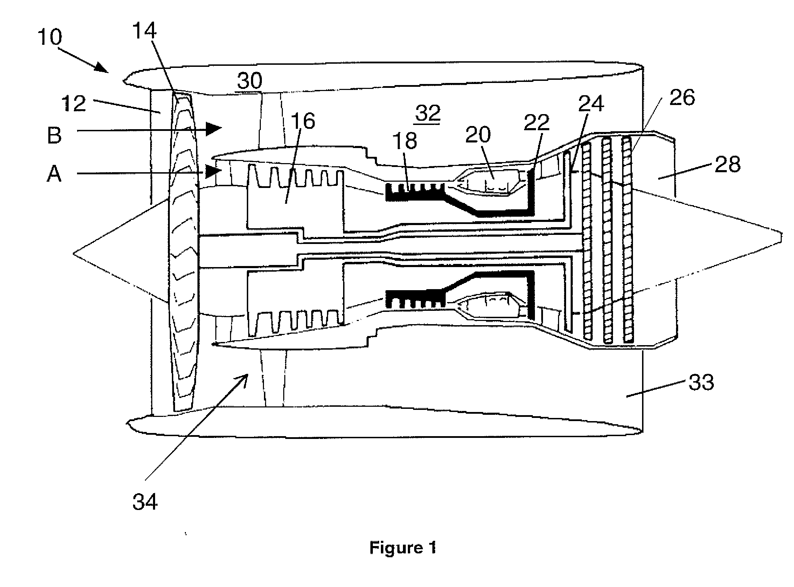

A gas turbine engine 10 is shown in Figure 1 and comprises an air intake 12 and a propulsive fan 14 that generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and a core exhaust nozzle 28. The components in axial flow A comprise the core engine 34. A nacelle 30 surrounds the gas turbine engine 10 and defines, in axial flow B, a bypass duct 32 culminating in a bypass exhaust nozzle 33.

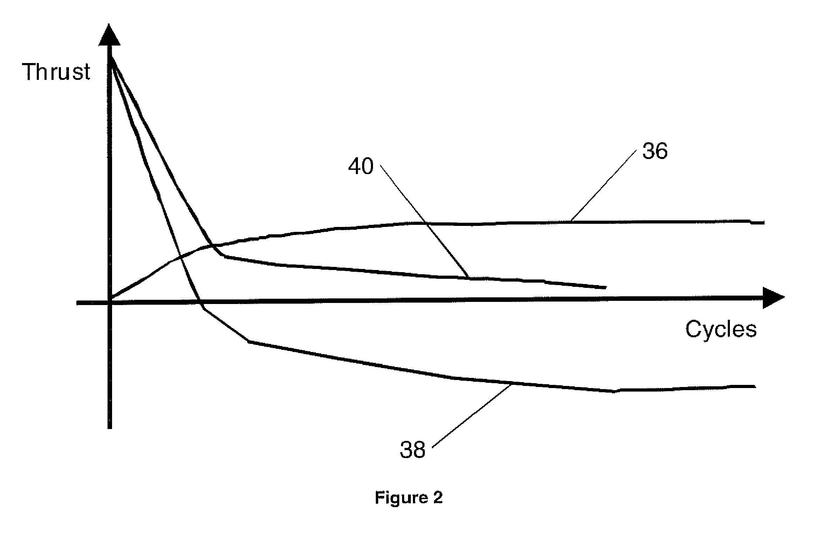

Figure 2 illustrates the relationship between thrust and engine cycles for a gas turbine engine 10 controlled using low pressure shaft speed NL. A minimum thrust level is guaranteed to a customer, for example through the certification process, and is indicated by the vertical position of the horizontal axis. In order to ensure that the minimum thrust level is met for a sufficient number of engine cycles the gas turbine engine 10 is configured to produce excess thrust, or to "overthrust", at certain points.

The line 36 represents the change in engine thrust due to core deterioration; that is deterioration of the core engine 34. The thrust produced by the core engine 34 for a given demanded NL increases as the engine cycles increase because the components are less efficient, due to debris and deterioration, and therefore run hotter. The line 38 represents the change in thrust due to fan deterioration; that is deterioration of the fan disc assembly comprising the fan disc, blades and fan case. The thrust produced by the fan 14 for a given demanded NL decreases as the engine cycles increase because the blade tip clearance increases, the surface finish is lost and debris builds up. The relatively rapid initial decrease is primarily a result of blade tip rub on the fan track liner which rapidly increases the blade tip clearance.

The line 40 represents the change in thrust due to engine deterioration and is the sum of the core deterioration 36 and the fan deterioration 38. An engine 10 or components thereof must be overhauled and/or replaced before the engine deterioration 40 crosses the minimum thrust level guaranteed, represented by the line 40 crossing the x axis. Thus for an engine controlled to NL the engine is initially overthrusted which increases operating temperatures, reduces temperature margins and thereby reduces service life.

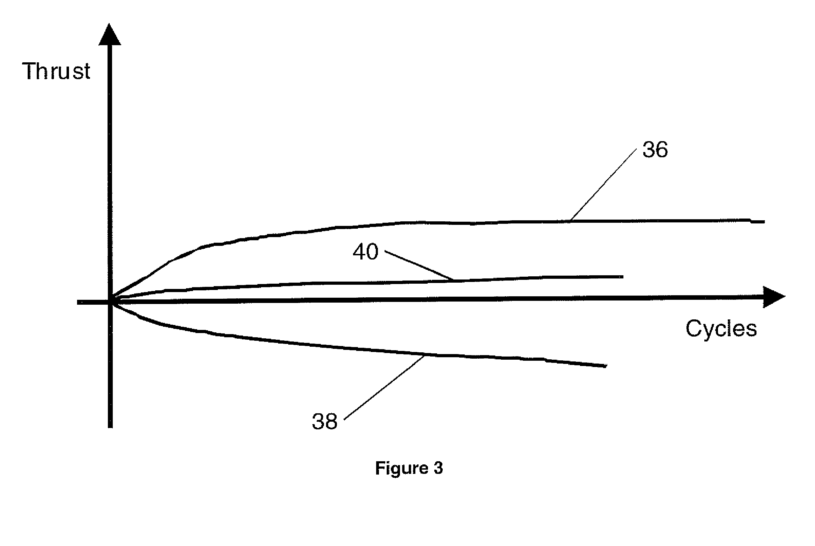

Figure 3 is equivalent to Figure 2 but illustrates the relationship between thrust and engine cycles for a gas turbine engine 10 controlled using turbofan power ratio (TPR) or engine pressure ratio (EPR). TPR is the normalised ratio of high pressure compressor exit pressure to air intake pressure. EPR may be the ratio of the core engine exit pressure to air intake pressure, the bypass exit pressure to air intake pressure, or a weighted sum of these dependent on the area ratio between the core and bypass nozzles. For an engine controlled to TPR or EPR the core deterioration 36 effects dominate so the engine overthrusts later in its service life which increases operating temperatures, reduces temperature margins and thereby increases operating costs. However the fan deterioration 38 has the effect that the engine deterioration 40 is relatively close to the minimum certified thrust.

At least one engine parameter is measured such as turbine gas temperature (TGT) which is measured downstream of a turbine, turbine entry temperature (TET) which is measured upstream of a turbine, engine gas temperature (EGT) which may be measured upstream or downstream of a turbine, high pressure compressor exit pressure (P₃₀), core nozzle exit pressure, or bypass nozzle exit pressure. The measured engine parameters may be trimmed or otherwise processed after measurement but will be referred to simply as measured engine parameters for the purposes of this invention. Alternatively the difference between the measured and modelled shaft speed, expressed as a percentage, may be used as the engine parameter.

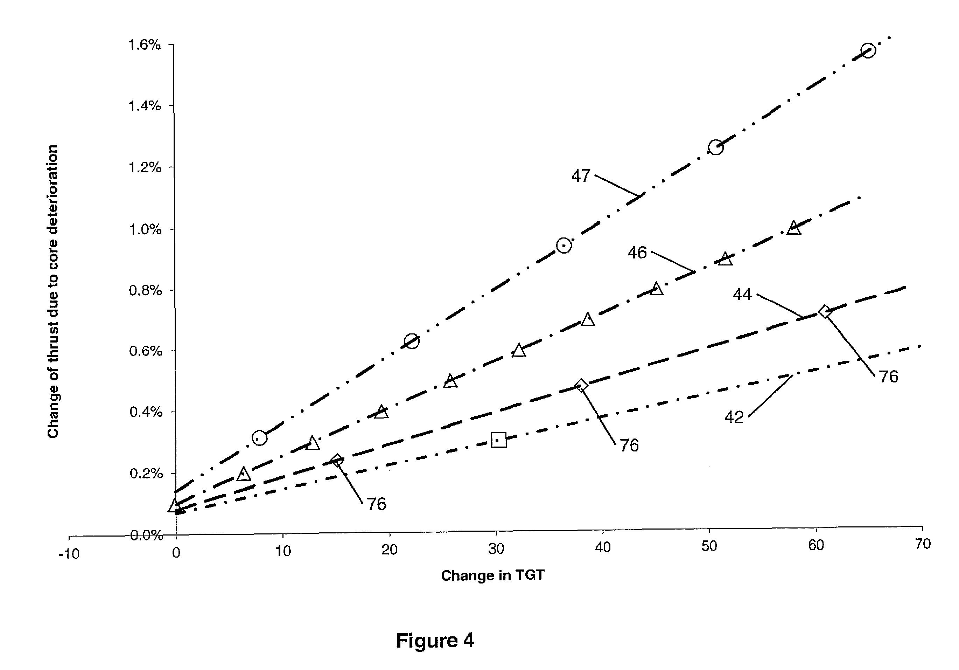

Using the thrust to cycles relationships shown in Figure 2 or Figure 3, a model can be constructed that relates one or more measured engine parameter to the thrust change due to core deterioration 36 or fan deterioration 38. A graph of an exemplary model is shown in Figure 4 in which change of thrust due to core deterioration is plotted against change in TGT in degrees centigrade. Lines 42, 44, 46 and 47 show the relationship for four exemplary engine conditions, namely maximum takeoff, 60% of full power, maximum takeoff at high altitude, and maximum continuous thrust.

Thus for given measured TGT, the change in TGT per engine cycle can be calculated. Then the change of thrust due to core deterioration is read off the vertical axis of the graph in Figure 4 for the calculated change in TGT and the appropriate engine condition line. Where the engine condition does not exactly match one of lines 42, 44, 46, 47 a point can be interpolated between the lines using any known interpolation method.

A similar graph can be plotted for the change in thrust due to fan deterioration against change in TGT. A similar graph can also be plotted for the change in thrust due to the fan deterioration or core deterioration against change in a different measured engine parameter such as TET or P₃₀.

The graph of Figure 4 and similar graphs are one example of a reference database relating the change in measured engine parameter to change in thrust due to fan or core deterioration. Other instances of the reference database may comprise a look up table and one or more equations, with suitable interpolation between values in the table or the equations as necessary.

When a gas turbine engine 10 is due for maintenance it may be deemed necessary to replace a sub-assembly such as the core engine 34 or fan assembly, for example to reduce customer disruption by minimising the time that the engine 10 is off-wing. Alternatively one or more module, for example a compressor stage, or component may be replaced. One effect of replacing a component, module or sub-assembly is that, depending on what is replaced, the amount of overthrust supplied on return to service may be higher or lower than the amount at removal for overhaul. For example, overthrust is reduced if the core engine 34 is replaced and the fan 14 is merely cleaned.

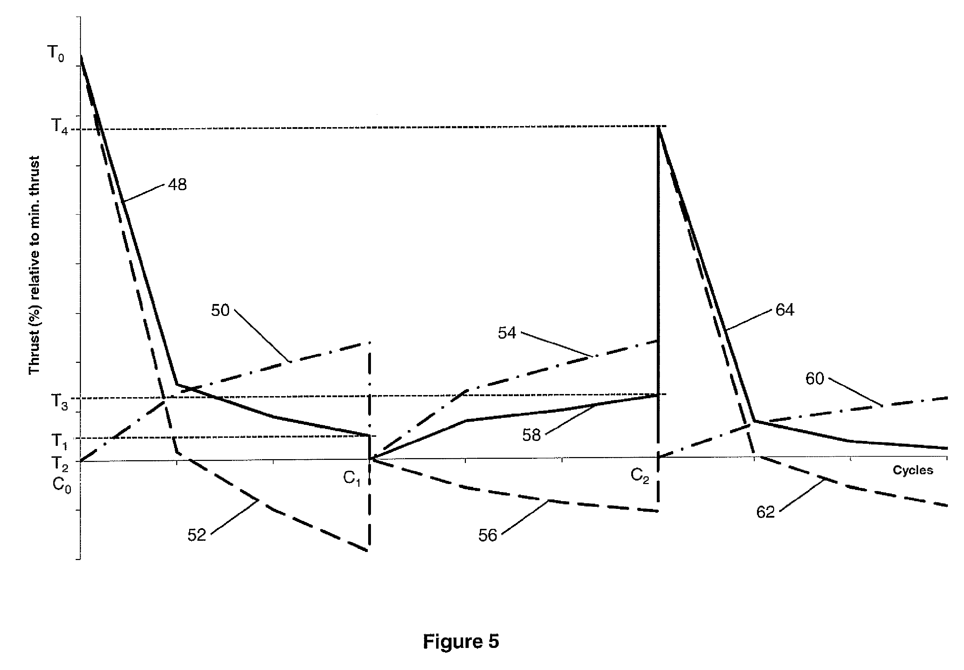

Figure 5 illustrates the thrust profile for an engine controlled to NL. The initial engine thrust profile against engine cycles is shown by curve 48, which is broadly equivalent to line 40 in Figure 2, and begins at zero engine cycles C₀ and thrust T₀ which represents the engine production pass off. T₀ represents the thrust margin available because it is the amount of overthrust relative to the minimum level indicated by the vertical position of the horizontal axis. The initial overthrust deterioration 48 is the sum of the illustrated core deterioration 50 and fan deterioration 52.

At a number of cycles indicated by C₁ the engine 10 is scheduled for maintenance. In the period C₀ to C₁ the available thrust margin has decreased to T₁, close to the minimum level, a change of approximately 1% of the minimum certified thrust. One or more components, modules or sub-assemblies are replaced by new ones during the maintenance or overhaul activity. In the illustrated example, the core engine 34 is replaced or overhauled so that it is 'as new'. Thus the core deterioration 54 after C₁ has a similar shape to that between C₀ and C₁. In the illustrated example the fan 14 is either not maintained or is merely cleaned which has a small effect on the deterioration profile. Thus the fan deterioration 56 after C₁ is shaped as the continuation of the fan deterioration 52 before C₁. The fan deterioration 52, 56, if vertically aligned at C₁, is equivalent to the fan deterioration 38 illustrated in Figure 2.

In the period after C₁ the core deterioration 54 is dominant. Thus the engine deterioration 58, which is the sum of the core deterioration 54 and fan deterioration 56, shows a positive correlation between overthrust and engine cycles. It is therefore desirable to re-trim the engine control parameter NL at C₁ so that the thrust margin is zero; that is, the thrust T₂ at return to service following overhaul at C₁ is equal to the minimum certified thrust. The difference between T₁ and T₂ is the effect of the re-trimming of NL.

At C₂ a further maintenance or overhaul is scheduled when the thrust has reached T₃. In this example maintenance, the core engine 34 is cleaned or partially refurbished so that the core deterioration 60 after C₂ shows less overthrust than between C₁ and C₂. The fan 14 is refurbished to a high standard but not to 'as new' so that the amount of overthrust after return to service at C₂ is set to T₄ which is lower than the engine production pass off thrust T₀. The fan deterioration 62 after C₂ has a similar profile to the fan deterioration 48 between C₀ and C₁ although the gradients are shallower. Thus in the period after C₂ the fan deterioration 62 dominates and the engine deterioration 64 is the sum of the fan deterioration 62 and core deterioration 60. The engine control parameter NL is re-trimmed so that the overthrust shown by the engine deterioration 64 remains above the minimum certified thrust indicated by the vertical position of the horizontal axis until the next scheduled maintenance.

Subsequent scheduled maintenance will have the same pattern of resetting one or both of the core deterioration or fan deterioration and thereby causing a trim change. The interval between maintenance activities and/or the gradient of the engine thrust deterioration curve will likely decrease as less thrust margin is recovered at each overhaul since some deteriorated components remain in the engine 10.

The same applies mutatis mutandis where an engine is controlled to TPR or EPR instead of to NL. For an engine controlled to TPR or EPR there is a change of approximately 0.5% of the minimum certified thrust between the engine production pass off thrust and the first maintenance event.

Thus the total change of thrust is the net effect of three component effects. Firstly an effect due to changing the core engine 34 or a component or module within the core engine 34 which acts to decrease the available thrust margin for a given NL control setting. Secondly an effect due to changing the fan deterioration 38 which acts to increase the available thrust for a given NL control setting. It will be apparent to the skilled reader that deterioration of some components, modules and sub-assemblies will have an effect on both the core deterioration 36 and the fan deterioration 38 whilst for others the effect is on only one of the core deterioration 36 and the fan deterioration 38. Thirdly, an effect due to the trim value applied to force the engine deterioration line 40 to be close to but always above the minimum certified thrust.

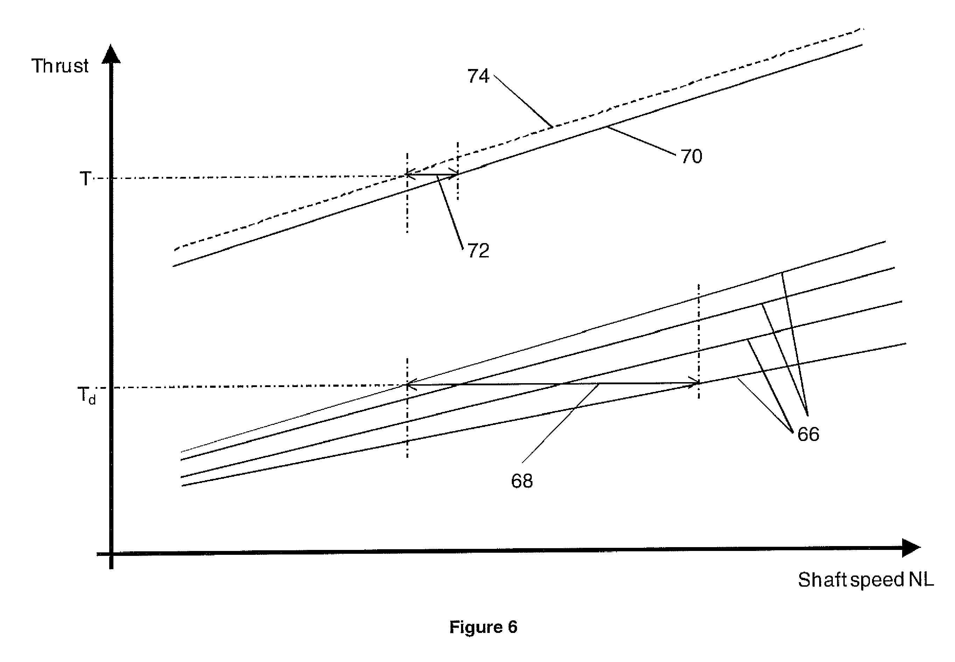

Figure 6 illustrates trimming of engine control parameter NL. A similar figure is applicable for an engine controlled to TPR or EPR or any other engine control parameter. The lines 66 illustrate the relationship between thrust and shaft speed NL measured at production pass off on four exemplary engines. The spread of shaft speed NL required to produce a given desired thrust T_{d} is shown by double-headed arrow 68 and is, for example, ±0.5% of the mean speed. The line 70 is the minimum certified thrust for the engines 10. Thus it is necessary to trim the engine control parameter NL so that each of the lines 66 is displaced or transformed to be above the line 70 for every shaft speed NL. The displacement may be solely vertical or may include a component of skew so that the gradient of each line 66 is also altered.

In one embodiment of trimming, the shaft speed NL can be trimmed in steps, for example of 0.1% extent. Trimming is applied separately to each engine 10 so that each line 66 is individually displaced to fall on or between the minimum certified thrust 70 and the upper bound line 74. Several trimming steps are applied initially to transform the lines 66. For clarity the displaced versions of lines 66 are not shown in Figure 6. This has the effect of decreasing the spread of NL at a given thrust T to that illustrated by double-headed arrow 72, for example to approximately 0.1% of the mean speed.

The lines 66 may be parallel to each other, diverge, converge or even cross over each other. The lines 66 may have a different shape than that illustrated. For example, they may each be comprised of two or more contiguous sections having a different gradient. The transformed lines that lie between minimum certified thrust 70 and the line 74 may be straight; that is have a single gradient. Alternatively the lines 66 may be curved. The transformed lines may be curved to be parallel to the lines 66, differently curved or straight.

The lines 66 may be transformed by a simple increase of one or more steps. Alternatively they may be transformed by a different number of steps at different speeds, or by an equation such as a polynomial equation.

In practical applications of the method of the present invention the trim value can be directly correlated to changes in the measured engine parameter so that the intermediate step of calculating the change of thrust is not required. Again discrete step changes of trim value may be used. Referring back to Figure 4 and considering the 60% full power line 44, trim interval points 76 are marked by open diamonds. Thus for changes of TGT up to 15°C at the first trim interval point 76, a first trim step of 0.1% is applied. For changes of TGT between 15°C and 38°C at the second trim interval point 76 a second trim step of 0.1% is applied, making a total trim increase of 0.2%. Similarly for changes of TGT between 38°C and 61 °C at the third trim interval point 76 a third trim step of 0.1% is applied, making a total trim increase of 0.3%.

Similarly, trim interval points 76 are indicated on the line 42 by open squares, on the line 46 by open triangles and on the line 47 by open circles. On one line 42, 44, 46, 47, the temperature intervals between trim interval points 76 are preferably equal. Alternatively they may increase or decrease with increasing change of TGT. As will be apparent, the trim interval points 76 on different lines 42, 44, 46, 47 are at different spacing from the trim interval points 76 on others of the lines 42, 44, 46, 47.

Once calculated, the new trim value is applied to the engine control parameter. For example, the new value may be stored on a data entry plug which is plugged into the engine control unit of an engine control system and used to upload the new trim value to the engine control unit. Alternatively the trim value may be replaced by the new trim value in the engine control system via a wired or wireless data link. The new value may be supplied at the same time as other updates including engine control software updates.

Alternatively the new trim value may be calculated in the engine control system when the replacement components, modules or sub-assembly have been installed. The new trim value may be applied immediately or flagged for the pilot or maintenance personnel to confirm and/or apply manually.

In an alternative embodiment a threshold is set for the change of thrust. The engine control system is configured to receive the measured engine parameter, calculate the change in that parameter and calculate the change of thrust therefrom, each during engine running. The change of thrust is then compared to a predetermined threshold dynamically; that is during engine running. If the change of thrust is greater than the predetermined threshold a new trim value is calculated and applied automatically. Advantageously, this embodiment of the method enables the thrust margin, the amount of overthrust above the minimum guaranteed level, to be kept low because the trim value can be updated more frequently than at overhaul or maintenance intervals.

Optionally the change of thrust must exceed the predetermined threshold for a given period of time or number of readings in order to confirm the change of thrust before the new trim value is calculated. Where the change of thrust over the given period of time or number of readings differs, albeit each calculation being greater than the threshold, an average change of thrust may be used to calculate the new trim value.

In a further embodiment the engine control system measures and records data to produce a bespoke deterioration model. The trim values can then be set and re-trimmed according to the method of the present invention on the basis of the bespoke deterioration model. There is an initialisation period in which insufficient data has been collected to build the model. However, since deterioration typically takes many hundreds or thousands of engine cycles, no re-trimming will be necessary during the initialisation of the model and so this period will not have a detrimental effect.

Where the engine control parameter is turbofan power ratio TPR or engine pressure ratio EPR, the fan deterioration 38 does not dominate the engine deterioration 40, as seen when comparing Figure 2 and Figure 3. This means that the trim directions may be reversed relative to that described in relation to the engine controlled to shaft speed NL, or the amount of trim may be smaller.

Although the engine control parameter has been described in some embodiments as low pressure shaft speed NL it may alternatively be non-dimensionalised by dividing the low pressure shaft speed NL measurement by the square root of ambient temperature. The low pressure shaft speed NL could alternatively be corrected using a fixed average day temperature. Alternatively it may be a different shaft speed, specifically high pressure shaft speed NH or intermediate pressure shaft speed NI. These shaft speeds may be normalised, corrected or non-dimensionalised as for NL.

Although embodiments of the present invention have been described with respect to a gas turbine engine 10 having three rotational shafts it has equal utility for a gas turbine engine 10 having two rotational shafts.

The method of the present invention may find utility for industrial gas turbine engines or for marine gas turbine engines where installed in locations in which it is not possible to measure thrust directly.

## Claims

1. A method of re-trimming an engine control parameter of a gas turbine engine comprising steps to:
a measure an engine parameter over time;
b calculate change in the measured parameter per engine cycle;
c determine change of thrust due to the calculated change in the measured parameter from a reference database;
d define a new trim value for the engine control parameter that is a function of the change of thrust; and
e apply the new trim value to the engine control parameter.

2. A gas turbine engine comprising the method as claimed in claim 1.

3. A gas turbine engine as claimed in claim 2 wherein the gas turbine engine comprises two shafts.

4. A gas turbine engine as claimed in claim 2 wherein the gas turbine engine comprises three shafts.

5. A method as claimed in any of claims 1 to 4 wherein the control parameter is selected from the group comprising: shaft speed; turbofan power ratio; engine pressure ratio.

6. A method as claimed in any of claims 1 to 5 wherein the measured engine parameter is selected from the group comprising: turbine gas temperature; compressor exit pressure; total engine temperature; engine gas temperature; difference between modelled shaft speed and measured shaft speed.

7. A method as claimed in any of claims 1 to 6 wherein the reference database comprises a graph relating the change of thrust to the calculated change in the measured parameter.

8. A method as claimed in any of claims 1 to 6 wherein the reference database comprises at least one equation relating the change of thrust to the calculated change in the measured parameter.

9. A method as claimed in any of claims 1 to 6 wherein the reference database comprises a look up table and a method to interpolate between values.

10. A method as claimed in any of claims 1 to 9 wherein step 1e comprises applying the new trim value automatically.

11. A method as claimed in any of claims 1 to 9 wherein step 1e comprises applying the new trim value manually.

12. A method as claimed in any of claims 1 to 11 wherein step 1 e comprises applying the new trim value in response to the determined change of thrust exceeding a threshold.

13. A method as claimed in any of claims 1 to 11 wherein step 1 e comprises applying the new trim value in response to changing an engine component.

14. A method as claimed in claim 13 wherein the engine component comprises a subsystem or module of the engine.

15. A method as claimed in claim 14 wherein the subsystem or module comprises one of the group comprising: an engine core; an engine fan assembly; a compressor module; a turbine module.
